# EUROPÄISCHE PATENTSCHRIFT

(11) **EP 2 882 699 B1**
(45) Veröffentlichungstag und Bekanntmachung des Hinweises auf die Patenterteilung: **14.03.2018**
(21) Anmeldenummer: 13749999.2
(22) Anmeldetag: 18.07.2013
(51) Int. Cl.: C04B 35/634, C04B 37/00, F16B 5/02, F16B 33/00, F16B 43/00, F16F 1/366

(54) **BAUTEILVERBINDUNG MIT ZUMINDEST ZWEI CFC-KOMPONENTEN**
COMPONENT CONNECTION COMPRISING AT LEAST TWO CFC COMPONENTS
LIAISON D'UN ÉLÉMENT STRUCTUREL AVEC AU MOINS DEUX COMPOSANTS CFC

(30) Priorität: 13.08.2012 DE 102012214407
(43) Veröffentlichungstag der Anmeldung: 17.06.2015
(73) Patentinhaber: Schunk Kohlenstofftechnik GmbH, 35452 Heuchelheim (DE)
(72) Erfinder: SCHÖNFELD, Jeremias, 35625 Hüttenberg (DE); NAUDITT, Gotthard, 35625 Hüttenberg (DE); WEIß, Roland, 35625 Hüttenberg (DE); HENRICH, Martin, 35582 Wetzlar (DE)
(74) Vertreter: advotec.
(86) Internationale Anmeldenummer: PCT/EP2013/065206
(87) Internationale Veröffentlichungsnummer: WO 2014/026822

(56) Entgegenhaltungen:
- DE-A1- 2 334 971
- US-A- 5 022 803
- US-A- 5 503 783

## Beschreibung

Die Erfindung betrifft eine Bauteilverbindung mit zumindest zwei CFC-Komponenten, die mittels einer ausschließlich Verbindungselemente aus CFC oder Graphit aufweisenden Verbindungseinrichtung miteinander verbunden sind.

Bauteilverbindungen zwischen CFC-Komponenten kommen grundsätzlich in allen Fällen zum Einsatz, in denen CFC-Komponenten als Strukturelemente von Maschinenteilen oder Tragkonstruktionen eingesetzt werden. Neben statischen oder dynamischen mechanischen Belastungen kommen je nach Einsatzfall durch besondere Umgebungsbedingungen weitere Belastungen, wie insbesondere thermische Belastungen, hinzu, die die Zeitstandfestigkeit einer Verbindung beeinflussen.

Aus der US 5 022 803 A ist eine Bauteilverbindung mit zwei CFC-Komponenten bekannt, die als formschlüssige Verbindungseinrichtung einen CFC-Bolzen aufweist.

Die US 5 503 783 A offenbart Federelemente aus einem CFC-Material, die spiral- oder ringförmig ausgestaltet sind und beispielsweise zum Ersatz von entsprechenden Metall-Federelementen in hochtemperaturbelastenden Verbindungen dienen.

Die DE 23 34 971 A1 offenbart unterschiedliche Ausführungen von Federelementen in einem CFC-Material als temperatur- und korrosionsfeste Federelemente.

Beispielsweise werden CFC-Komponenten auch bei Umwälzvorrichtungen eingesetzt, die zur Umverteilung bzw. gleichmäßigen Durchmischung einer Ofenatmosphäre in Industrieöfen eingesetzt werden. Derartige Öfen dienen beispielsweise zur Durchführung thermischer Prozesse, in denen Kohlenstoffmaterialien einer Pyrolyse unterzogen werden oder bei denen eine Carbonisierung oder Graphitierung von Kohlenstoffbauteilen stattfindet.

Unabhängig davon, welche Prozesse im Einzelnen in einem Industrieofen stattfinden, sind die dabei eingesetzten Umwälzvorrichtungen erheblichen thermischen Beanspruchungen ausgesetzt, da in der Ofenatmosphäre teilweise Temperaturen von 2 000 °C oder mehr erreicht werden. Aufgrund dieser hohen thermischen Beanspruchungen ist man mittlerweile dazu übergegangen, für die Umwälzvorrichtungen Materialien zu verwenden, die sich durch einen besonders geringen Wärmeausdehnungskoeffizienten auszeichnen, sodass sich dadurch thermisch induzierte Spannungen in den verwendeten Materialien begrenzen lassen. Aufgrund seiner Hochtemperaturfestigkeit und seines geringen Gewichts hat sich als Konstruktionsmaterial für Umwälzvorrichtungen kohlenfaserverstärkter Kohlenstoff (CFC) als besonders geeignetes Material herausgestellt. Problematisch ist jedoch, dass kohlenfaserverstärkter Kohlenstoff aufgrund seiner Faserorientierung eine ausgeprägte Anisotropie aufweist, mit der Folge, dass CFC in Faserrichtung einen deutlich geringeren thermischen Ausdehnungskoeffizienten aufweist als senkrecht zur Faserrichtung. Dies führt dazu, dass etwa bei Verbindungen zwischen CFC-Komponenten, die über eine Schraubverbindung erfolgen, die Verbindungselemente aus CFC oder Graphit aufweisen, wie beispielsweise einen aus CFC hergestellten Gewindebolzen, der mittels Graphit-Muttern mit den CFC-Komponenten verspannt ist, bei sich einander kreuzenden Ausrichtungen der Fasern der CFC-Komponenten und des Verbindungsbolzens zum Auftreten erheblicher mechanischer Spannungen im Bereich der Schraubenverbindung kommen kann.

Da CFC insbesondere im Zwischenfaserbereich extrem porös ausgebildet ist, können diese Spannungen zu Setzerscheinungen im Bereich der Schraubverbindung führen, mit der Folge, dass die ursprünglich kraftschlüssig wirkende Schraubverbindung zwischen den CFC-Komponenten sich im Verlauf der Temperaturbelastung löst und es zu einem Bauteilversagen kommen kann.

Eine Möglichkeit, ein derartiges Bauteilversagen zu verhindern, besteht darin, in Abhängigkeit von der auftretenden Temperaturbelastung Wartungsintervalle zu definieren, um gegebenenfalls noch rechtzeitig vor dem Bauteilversagen einen Austausch der Schraubverbindungen vornehmen zu können. Da mit der Durchführung der Wartung bzw. Inspektion der Umwälzvorrichtungen und insbesondere mit gegebenenfalls vorzunehmenden Reparaturen ein erheblicher Aufwand verbunden ist, liegt der vorliegenden Erfindung die Aufgabe zugrunde, insbesondere an Umwälzvorrichtungen ausgeführte Bauteilverbindungen so weiterzuentwickeln sowie ein geeignetes Verfahren zur Herstellung derartiger Bauteilverbindungen vorzuschlagen, dass eine dauerhaft kraftschlüssige Verbindung zwischen den CFC-Komponenten möglich wird.

Zur Lösung dieser Aufgabe weist die erfindungsgemäße Bauteilverbindung die Merkmale der Ansprüche 1 und 2 auf. Die erfindungsgemäße Bauteilverbindung weist zumindest zwei miteinander zu verbindende CFC-Komponenten auf, die mittels einer ausschließlich Verbindungselemente aus CFC oder Graphit aufweisenden Verbindungseinrichtung kraftschlüssig miteinander verbunden sind, wobei die Bauteilverbindung ein Federelement aus einem CFC-Werkstoff aufweist.

In einer ersten erfindungsgemäßen Variante ist das Federelement als Balkenfederelement ausgebildet und mit zwei Stützfüßen zur Abstützung an einer CFC-Komponente und einen die Stützfüße miteinander verbindenden Federbalken zur Abstützung am Bolzenkopf oder der Mutter der als Schraubverbindungseinrichtung ausgeführten Verbindungseinrichtung versehen.

Alternativ ist das Federelement in einer zweiten erfindungsgemäßen Variante als Ringfederelement ausgebildet mit einem Federring, der auf zwei gegenüberliegenden Axialflächen Stützfüße aufweist, die derart radial verteilt auf den Axialflächen angeordnet sind, dass jeweils ein auf einer Axialfläche ausgebildeter Stützfuß zwischen zwei auf der gegenüberliegenden Axialfläche ausgebildeten Stützfüßen ausgebildet ist.

Mit Einsatz des CFC-Federelements ist es möglich, Setzerscheinungen an einer kraftschlüssigen Verbindung zwischen zwei CFC-Komponenten durch die Wirkung des Federelementes zu kompensieren, ohne dass hierzu die Verwendung eines von dem Werkstoff der CFC-Komponenten abweichenden Werkstoffs notwendig wäre.

Obwohl es natürlich grundsätzlich bekannt ist, ein Federelement zur Kompensation von Setzerscheinungen an Schraubenverbindungen einzusetzen, können diese bekannten, aus Metall bestehenden Federelemente nicht bei der erfindungsgemäßen Umwälzvorrichtung eingesetzt werden, da diese in besonderem Maße zum Einsatz in einer Hochtemperaturumgebung dient. Bei den hier in Rede stehenden Temperaturen, die nicht selten 2 000 °C und mehr erreichen, ist beispielsweise die Kriechgrenze von Metallen bei weitem überschritten, sodass die gewünschte, kompensierende Federwirkung in dem vorgenannten Temperaturbereich nicht mehr zur Verfügung steht. Durch die Verwendung eines Federelements aus einem CFC-Werkstoff wird erstmalig der Einsatz von Setzerscheinungen kompensierenden Federelementen an Schraubverbindungen möglich, die auch unter Hochtemperaturbedingungen dauerhaft eine kraftschlüssige Verbindung zwischen den miteinander mittels der Schraubverbindung verbundenen Komponenten sicherstellen müssen.

In der überwiegenden Zahl der Fälle ist es vorteilhaft, die Verbindungseinrichtung zwischen den CFC-Komponenten als Schraubverbindungseinrichtung auszubilden, die einen Gewindebolzen aus einem CFC-Werkstoff und zumindest eine Mutter aus einem Graphit-Werkstoff aufweist, wobei das Federelement zwischen der Mutter und einer CFC-Komponente derart angeordnet ist, dass zwischen der Mutter und der CFC-Komponente eine Druckkraft wirkt.

Ganz grundsätzlich ist der Einsatz der Federelemente aus einem CFC-Werkstoff natürlich nicht auf die Kombination mit einer als Schraubverbindungseinrichtung ausgeführten Verbindungseinrichtung beschränkt. Vielmehr lassen sich Federelemente aus einem CFC-Werkstoff auch zur Kompensation von Setzerscheinungen an anderen kraftschlüssigen Verbindungseinrichtungen verwenden, wie beispielsweise eine Klemm-oder Keilverbindung, die in gleicher Weise zur kraftschlüssigen Wirkung eine mechanisch vorgespannte Verbindung ermöglichen wie eine Schraubverbindung.

Besonders vorteilhaft ist es, wenn der Gewindebolzen mit einem Bolzenkopf versehen ist, und der Gewindebolzen zwei miteinander kraftschlüssig zu verbindende CFC-Komponenten durchdringt, die zwischen dem Bolzenkopf des Gewindebolzens und der Mutter angeordnet sind, sodass das CFC-Federelement grundsätzlich in gleicher Weise einsetzbar ist wie ein konventionelles Stahl-Federelement, dessen Verwendung aus den vorstehend erörterten Gründen bei der erfindungsgemäßen Umwälzvorrichtung ausscheidet.

Ein insgesamt einfacher Aufbau der Verbindungseinrichtung mit einer möglichst geringen Anzahl unterschiedlicher Bauteile wird möglich, wenn der Bolzenkopf durch eine Mutter aus einem Graphit-Werkstoff gebildet ist.

Bei einer besonders bevorzugten Ausführungsform der Umwälzvorrichtung kann die Anzahl der Bauteile noch weiter reduziert werden, dadurch, dass der Gewindebolzen an einer ersten der kraftschlüssig miteinander verbundenen CFC-Komponenten ausgebildet ist und die weitere CFC-Komponente durchdringt, die zwischen der ersten CFC-Komponente und der Mutter angeordnet ist.

Besonders vorteilhaft für die Wirksamkeit der Federelemente ist es, wenn zumindest der Federbalken des Balkenfederelements oder der Federring des Ringfederelements eine Faserorientierung mit Fasern aufweist, die sich längs einer die Stützfüße miteinander verbindenden Belastungsachse erstrecken.

Bei einer Ausbildung der Bauteilverbindung an einer Umwälzvorrichtung zum Umwälzen einer umgebenden Atmosphäre, wobei die Umwälzvorrichtung eine Mehrzahl von Komponenten aufweist, die zumindest eine Welle zur Verbindung der Umwälzvorrichtung mit einer Antriebseinrichtung, einen mit der Welle verbundenen Schaufelblattträger und eine Mehrzahl auf dem Schaufelblattträger angeordneter Schaufelblätter zur Beaufschlagung der Atmosphäre mit einem Strömungsimpuls umfassen, sind zumindest der Schaufelblattträger und die Schaufelblätter als CFC-Komponenten ausgebildet, zwischen denen die Bauteilverbindung ausgebildet ist.

Hiermit wird eine dauerhaft kraftschlüssige Verbindung zwischen miteinander verbundenen CFC-Komponenten der Umwälzvorrichtung ermöglicht, so dass Setzerscheinungen infolge einer Spaltbildung zwischen den miteinander verbundenen Komponenten und einer daraus resultierenden Unterbrechung des Kraftschlusses durch die stoffschlüssige Verbindung verhindert wird werden.

Nachfolgend werden bevorzugte Ausführungsbeispiele der Erfindung anhand der Zeichnung näher erläutert.

Es zeigen:
- **Fig. 1:**: eine Umwälzvorrichtung in einer ersten Ausführungsform in isometrischer Darstellung;
- **Fig. 2:**: die in **Fig. 1** dargestellte Umwälzvorrichtung in Draufsicht;
- **Fig. 3:**: die in **Fig. 2** dargestellte Umwälzvorrichtung in Schnittdarstellung gemäß Schnittlinienverlauf III-III in **Fig. 2**;
- **Fig. 4:**: eine weitere Ausführungsform einer Umwälzvorrichtung in isometrischer Darstellung;
- **Fig. 5:**: die in **Fig. 4** dargestellte Umwälzvorrichtung in Draufsicht;
- **Fig. 6:**: die in **Fig. 5** dargestellte Umwälzvorrichtung in Schnittdarstellung gemäß Schnittlinienverlauf VI-VI in **Fig. 5**;
- **Fig. 7:**: eine vergrößerte Detaildarstellung einer Schraubverbindungseinrichtung an der **Fig. 1** dargestellten Umwälzvorrichtung;
- **Fig. 8:**: ein bei der in **Fig. 7** dargestellten Schraubverbindungseinrichtung eingesetztes Federelement in Seitenansicht;
- **Fig. 9:**: eine weitere Ausführungsform eines Federelements für eine Schraubverbindungseinrichtung in isometrischer Darstellung;
- **Fig. 10:**: eine zu der in **Fig. 7** dargestellten Schraubverbindungseinrichtung alternative Ausführungsform einer Schraubverbindungseinrichtung mit einem auf den Verbindungsbereich zwischen den Komponenten der Schraubverbindungseinrichtung aufgebrachten Verbindungsmaterial;
- **Fig. 11:**: die in **Fig. 10** dargestellte Schraubverbindungseinrichtung nach einem lokalen Verschweißen der mit dem Verbindungsmaterial beschichteten Komponenten;
- **Fig. 12:**: eine vergrößerte Detaildarstellung einer Schraubverbindungseinrichtung an der in **Fig. 6** dargestellten Umwälzvorrichtung.

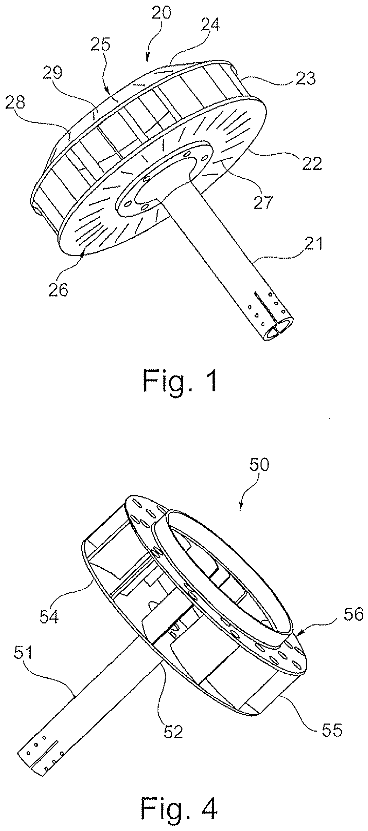

**Fig. 1** zeigt in einer ersten Ausführungsform eine Umwälzvorrichtung 20 mit einer Welle 21 zur Verbindung der Umwälzvorrichtung 20 mit einer hier nicht näher dargestellten Antriebsvorrichtung und einem mit der Welle 21 drehstarr verbundenen Schaufelblattträger 22, der zur Anordnung einer Mehrzahl über den Umfang des Schaufelblattträgers 22 verteilt angeordneter Schaufelblätter 23 dient. Wie **Fig. 1** zeigt, sind die Schaufelblätter 23 zwischen dem Schaufelblattträger 22 und einem konischen Abschlussring 24 aufgenommen und hierzu jeweils über Formschlussverbindungen 25 bzw. 26 mit ihren axialen Enden 27, 28 in schlitzförmige Ausnehmungen 29 des Schaufelblattträgers 22 und des Abschlussrings 24 eingesetzt.

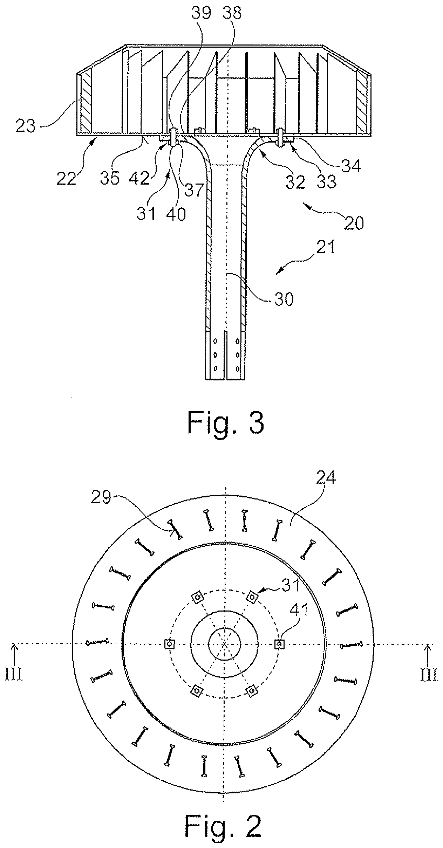

Wie insbesondere den **Fig. 2** und **3** zu entnehmen ist, sind zur Verbindung der Welle 21 mit dem Schaufelblattträger 22 eine Mehrzahl konzentrisch zu einer Mittelachse 30 der Umwälzvorrichtung 20 angeordnete Schraubverbindungseinrichtungen 31 vorgesehen. Zum Anschluss an den Schaufelblattträger 22 weist die Welle 21 einen an einem axialen Anschlussende 32 der Welle 21 ausgebildeten Tellerflansch 33 auf, mit einem sich radial erstreckenden Flanschring 34, der an einer Unterseite 35 des scheibenförmig ausgebildeten Schaufelblattträgers 22 anliegt. Die Schraubverbindungseinrichtungen 31 sind so ausgebildet, dass ein Gewindebolzen 36 Durchgangsöffnungen 37, 38 im Flanschring 34 und im Schaufelblattträger 22 durchdringt und an seinen einander gegenüberliegenden axialen Enden 39, 40 jeweils mit einer Mutter 41 versehen ist. Bei dem in **Fig. 2** dargestellten Ausführungsbeispiel der Schraubverbindungseinrichtung 31 ist zwischen dem Flanschring 34 und der am unteren axialen Ende 40 des Gewindebolzens 36 angeordneten Mutter 41 ein Balkenfederelement 42 angeordnet.

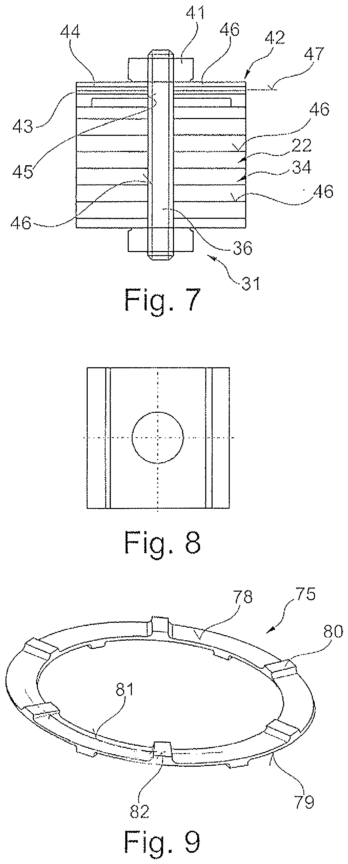

Wie der Detaildarstellung in **Fig. 7** zu entnehmen ist, weist das Balkenfederelement 42 ein sich mit axialen Enden auf Stützfüßen 43 abstützenden Federbalken 44 auf, der mit einer Durchgangsöffnung 45 zum Durchtritt des Gewindebolzens 36 versehen ist. Das Balkenfederelement 42 ist als CFC-Komponente ausgebildet mit einer Faserausrichtung 46, die sich im Bereich des Federbalkens 44 in Richtung einer zwischen den Stützfüßen 43 verlaufenden Belastungsachse 47 erstreckt, sodass bei einer Belastung des Federbalkens 44 infolge einer in der Schraubverbindungseinrichtung 31 wirkenden Vorspannkraft, die daraus im Federbalken 44 resultierende Zugspannung von den Fasern des CFC-Bauteils aufgenommen werden kann.

Wie ferner aus der schematischen Darstellung in **Fig. 7** deutlich wird, welche auch die Faserausrichtungen 46 im Flanschring 34 der Welle 21 und im Schaufelblattträger 22 sowie im Gewindebolzen 36 andeutet, sind bei der in **Fig. 7** beispielhaft dargestellten Schraubverbindungseinrichtung 31 mit Ausnahme der Muttern 41, die ausschließlich auf Druck belastet werden, sämtliche Komponenten als CFC-Komponenten ausgeführt. Grundsätzlich ist es natürlich auch möglich, die Muttern 41 als CFC-Komponenten und den Gewindebolzen 36 als Graphit-Komponente oder beide Komponenten jeweils übereinstimmend auszuführen.

Aufgrund der elastischen Nachgiebigkeit des Balkenfederelements kann die Schraubverbindungseinrichtung 31 bzw. der Gewindebolzen 36 der Schraubverbindungseinrichtung mit einer ausreichend großen Vorspannkraft belastet werden, sodass selbst dann, wenn es insbesondere senkrecht zur Faserausrichtung 46 in dem porösen Kohlenstoffmaterial der unter Vorspannkraft miteinander verspannten Komponenten zu Setzerscheinungen kommen sollte, diese durch die Elastizität des Balkenfederelements 42 ausgeglichen werden können, und die über die Schraubverbindungseinrichtung 31 miteinander verspannten Komponenten immer noch mit ausreichender Kraft gegeneinander anliegen, um Relativbewegungen der Komponenten wirksam zu verhindern.

Bei der in **Fig. 4** dargestellten Umwälzvorrichtung 50 ist eine Welle 51 mittels eines an einem axialen Anschlussende 52 der Welle 51 angeordneten Anschlussstücks 53 mit einem Schaufelblattträger 54 verbunden.

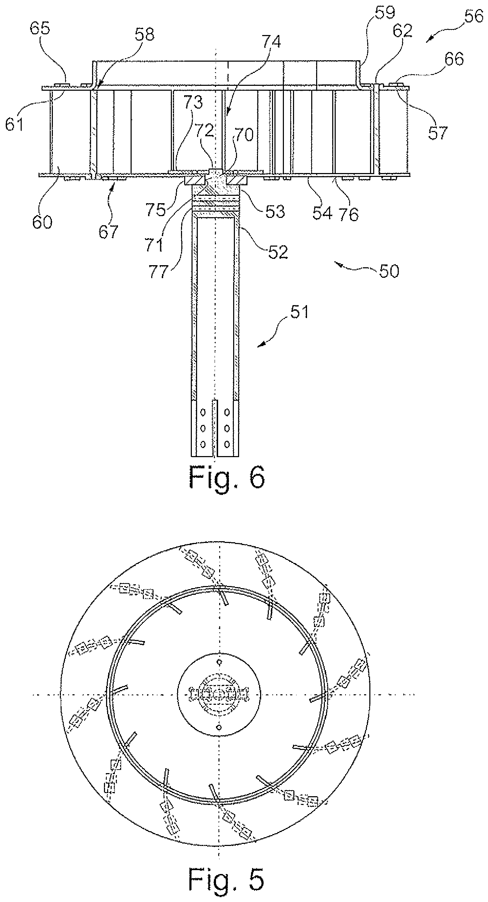

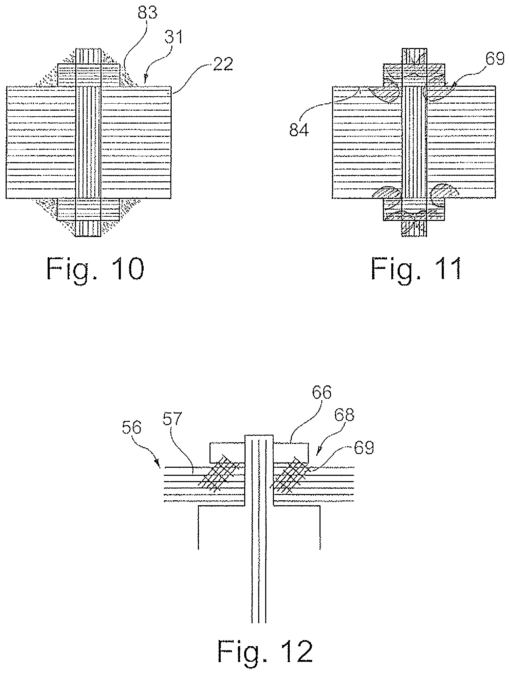

Bei der Umwälzvorrichtung 50 sind Schaufelblätter 55 zwischen dem Schaufelblattträger 54 und einem Abschlussring 56 aufgenommen, der, wie in **Fig. 6** dargestellt, als ebene Ringscheibe 57 mit einem an einem Innenumfang 58 der Ringscheibe 57 angeformten Ringsteg 59 ausgebildet ist. Zur Verbindung der Schaufelblätter 55 mit dem Schaufelblattträger 54 und dem Abschlussring 56 sind sowohl am unteren axialen Ende 60 als auch am oberen axialen Ende 61 der Schaufelblätter 55 Gewindebolzen 62 angeformt, die Durchgangsöffnungen 63 im Schaufelblattträger 54 und die Durchgangsöffnungen 64 in der Ringscheibe 57 des Abschlussrings 56 durchdringen und die an ihren freien axialen Enden 65 jeweils mit einer Mutter 66, die vorzugsweise aus Graphit gebildet ist, versehen ist. Bei dem in **Fig. 6** dargestellten Ausführungsbeispiel der Umwälzvorrichtung 50 sind im Unterschied zu dem in den **Fig. 1** bis **3** dargestellten Ausführungsbeispiel der Umwälzvorrichtung 20 Schraubverbindungseinrichtungen 67 vorgesehen, die kein Balkenfederelement 42 aufweisen. Anstelle eines Balkenfederelements 42 weisen die Schraubverbindungseinrichtungen 67 eine ergänzende stoffschlüssige Verbindung 68 auf, die, wie in **Fig. 12** dargestellt, in einer Verbindungszone 69 zwischen der Mutter 66 und dem Scheibenring 57 des Abschlussrings 56 ausgebildet ist.

Wie insbesondere die **Fig. 6** zeigt, ist zur Verbindung der Welle 51 das am axialen Anschlussende 52 der Welle 51 angeordnete Anschlussstück 53 mit einem am Anschlussstück 53 ausgebildeten Gewindebolzen 70 durch eine zentrale Durchgangsöffnung 71 hindurchgeführt und an seinem freien axialen Ende 72 mit einer Scheibenmutter 73 versehen, die zusammen mit dem Gewindebolzen 70 eine Schraubverbindungseinrichtung 74 zum Anschluss der Welle 51 an den Schaufelblattträger 54 ermöglicht.

Die Schraubverbindungseinrichtung 74 ist darüber hinaus mit einem Ringfederelement 75 versehen, das in **Fig. 9** als Einzelteil dargestellt ist und entsprechend der Darstellung in **Fig. 6** zwischen einer Unterseite 76 des Schaufelblattträgers 54 und dem Anschlussstück 53 angeordnet ist. Das im Fall des vorliegenden Ausführungsbeispiels als Graphitteil ausgebildete Anschlussstück 53 ist über Stiftverbindungen 77 drehstarr mit der rohrförmig ausgebildeten Welle 51 verbunden.

Wie **Fig. 9** zeigt, weist das Ringfederelement 75 an einem Federring 85 zwei einander gegenüberliegende Axialflächen 78, 79 auf, die jeweils mit umlaufend verteilt angeordneten Stützfüßen 80 versehen sind. Dabei sind die Stützfüße 80 so angeordnet, dass jeweils ein auf einer oberen Axialfläche 78 angeordneter Stützfüß zwischen zwei auf der unteren Axialfläche 79 angeordneten Stützfüßen 80 angeordnet ist. Das Ringfederelement 75 ist als CFC-Bauteil ausgebildet mit einer Faserausrichtung 81, die, wie in **Fig. 9** angedeutet, in Richtung einer sich zwischen den Stützfüßen 80 des Ringfederelements 75 erstreckenden Belastungsachse 82 verläuft. Wie bereits an dem Ausführungsbeispiel des Balkenfederelements 42 Bezug nehmend auf die **Fig. 1** bis **3** erläutert, ermöglicht die elastische Nachgiebigkeit des Ringfederelements 75 eine Kompensierung von Setzerscheinungen bei der Schraubverbindungseinrichtung 74.

Bezug nehmend auf die Figurenabfolge der **Fig. 10** und **11** wird nachfolgend eine Möglichkeit zur Herstellung der stoffschlüssigen Verbindung 68 erläutert, die ergänzend zu einer Formschlussverbindung 25, 26, wie in **Fig. 3** dargestellt, oder alternativ auch ergänzend zu einer Schraubverbindungseinrichtung zum Einsatz kommt.

Wie **Fig. 10** am Beispiel der Schraubverbindungseinrichtung 31 zeigt, erfolgt zunächst die Beschichtung der Schraubverbindungseinrichtung 31 im Bereich der beabsichtigten Verbindungszone 69 (**Fig. 11**) durch Auftragen eines Verbindungsmaterials 83, das im vorliegenden Fall als pastöses Material aufgebracht wird und im Wesentlichen aus Polyvinylalkohol mit einem Gewichtsanteil von 50 % Siliziumpulver besteht. Anschließend erfolgt eine Aufheizung der Verbindungseinrichtung auf eine Temperatur oberhalb von 1 400 °C in einer Schutzgasatmosphäre, wobei das Siliziumpulver aufschmilzt und mit dem Kohlenstoff aus der im Fall des vorliegenden Ausführungsbeispiels durch den Schaufelblattträger 22 gebildeten CFC-Komponente zu Siliziumcarbid reagiert.

Wie durch die schematische Darstellung in **Fig. 11** angedeutet, ist das Ergebnis der Reaktion die Ausbildung der Verbindungszone 69, die mit zunehmenden Abstand von einer zwischen den Komponenten gebildeten Grenzschicht 84 einen abnehmenden Silizium-Carbidgehalt aufweist.

Grundsätzlich ist es auch möglich, anstatt des Siliziums, das bei dem vorstehend erläuterten Ausführungsbeispiel als Carbidbildner dient, andere Carbidbildner zu verwenden, wie beispielsweise Metalle, insbesondere Titan, Tantal oder Chrom zur Erzeugung von Metallcarbiden in der Verbindungszone oder auch andere Halbleiter als Silizium zu verwenden, wie beispielsweise Bor. Insbesondere dann, wenn dem Silizium noch Ruß zugesetzt wird, eignet sich das Silizium in besonderer Art und Weise als Carbidbildner, da das Auftreten von freiem Silizium in der Verbindungszone durch den Zusatz von Ruß weitestgehend eingeschränkt werden kann, um somit eine Verbindungszone zu erhalten, die über einen weiten Temperaturbereich ein thermisch stabiles Materialverhalten ermöglicht.

## Patentansprüche

1. Bauteilverbindung mit zumindest zwei CFC-Komponenten, die mittels einer ausschließlich Verbindungselemente aus CFC oder Graphit aufweisenden Verbindungseinrichtung miteinander verbunden sind,
**dadurch gekennzeichnet,**
**dass** die Bauteilverbindung kraftschlüssig ist und ein Federelement aus einem CFC-Werkstoff aufweist, wobei das Federelement als Balkenfederelement (42) ausgebildet ist mit zwei Stützfüßen (43) zur Abstützung an einer CFC-Komponente und einem die Stützfüße miteinander verbindenden Federbalken (44) zur Abstützung am Bolzenkopf oder der Mutter (41, 66) der als Schraubverbindungseinrichtung (31, 67) ausgeführten Verbindungseinrichtung.

2. Bauteilverbindung mit zumindest zwei CFC-Komponenten, die mittels einer ausschließlich Verbindungselemente aus CFC oder Graphit aufweisenden Verbindungseinrichtung miteinander verbunden sind,
**dadurch gekennzeichnet,**
**dass** die Bauteilverbindung kraftschlüssig ist und ein Federelement aus einem CFC-Werkstoff aufweist, wobei das Federelement als Ringfederelement (75) ausgebildet ist mit einem Federring (85), der auf zwei gegenüberliegenden Axialflächen (78, 79) Stützfüße (80) aufweist, die derart radial verteilt auf den Axialflächen angeordnet sind, dass jeweils ein auf einer Axialfläche ausgebildeter Stützfuß zwischen zwei auf der gegenüberliegenden Axialfläche ausgebildeten Stützfüßen angeordnet ist.

3. Bauteilverbindung nach Anspruch 1 oder 2,
**dadurch gekennzeichnet,**
**dass** die Verbindungseinrichtung als Schraubverbindungseinrichtung (31, 67, 74) ausgebildet ist, die einen Gewindebolzen (36, 62, 70) aus einem CFC- oder Graphit-Werkstoff und zumindest eine Mutter (41, 66) aus einem CFC- oder Graphit-Werkstoff aufweist, und das Federelement zwischen der Mutter und einer CFC-Komponente derart angeordnet ist, dass zwischen der Mutter und der CFC-Komponente eine Druckkraft wirkt.

4. Bauteilverbindung nach Anspruch 3,
**dadurch gekennzeichnet,**
**dass** der Gewindebolzen (36, 62, 70) mit einem Bolzenkopf versehen ist, und der Gewindebolzen zwei miteinander kraftschlüssig zu verbindende CFC-Komponenten durchdringt, die zwischen dem Bolzenkopf des Gewindebolzens und der Mutter (41, 66) angeordnet sind.

5. Bauteilverbindung nach Anspruch 4,
**dadurch gekennzeichnet,**
**dass** der Bolzenkopf durch eine Mutter (41, 66) aus einem CFC- oder Graphit-Werkstoff gebildet ist.

6. Bauteilverbindung nach einem der Ansprüche 1 bis 3
**dadurch gekennzeichnet,**
**dass** der Gewindebolzen (62) an einer ersten der kraftschlüssig miteinander verbundenden CFC-Komponenten ausgebildet ist und die weitere CFC-Komponente durchdringt, die zwischen der ersten CFC-Komponente und der Mutter (66) angeordnet ist.

7. Bauteilverbindung nach einem der vorangehenden Ansprüche,
**dadurch gekennzeichnet,**
**dass** zumindest der Federbalken (44) des Balkenfederelements (42) oder zumindest der Federring (85) des Ringfederelements (75) eine Faserausrichtung (46, 81) mit Fasern aufweist, die sich längs einer die Stützfüße (43, 80) miteinander verbindenden Belastungsachse (47, 82) erstrecken.

8. Bauteilverbindung nach einem der vorangehenden Ansprüche,
**gekennzeichnet durch**
die Ausbildung an einer Umwälzvorrichtung (20, 50) zum Umwälzen einer umgebenden Atmosphäre, wobei die Umwälzvorrichtung eine Mehrzahl von Komponenten aufweist, die zumindest eine Welle (21, 51) zur Verbindung der Umwälzvorrichtung mit einer Antriebseinrichtung, einen mit der Welle verbundenen Schaufelblattträger (22, 54) und eine Mehrzahl auf dem Schaufelblattträger angeordneter Schaufelblätter (23, 55) zur Beaufschlagung der Atmosphäre mit einem Strömungsimpuls umfassen,
derart, dass zumindest der Schaufelblattträger und die Schaufelblätter als CFC-Komponenten ausgebildet sind, zwischen denen die Bauteilverbindung ausgebildet ist.

## Claims

1. A component connection comprising at least two CFC components which are interconnected by means of a connection device exclusively having connecting elements consisting of CFC or graphite,
**characterized in that**
the component connection is force-fitting and has a spring element consisting of a CFC material, the spring element being realized as a beam spring element (42) having two support legs (43) for support on a CFC component and an elastic beam (44) interconnecting the support legs for support on the bolt head or on the nut (41, 66) of the connection device, which is realized as a screw-connection device (31, 67)

2. A component connection comprising at least two CFC components which are interconnected by means of a connection device exclusively having connecting elements consisting of CFC or graphite,
**characterized in that**
the component connection is force-fitting and has a spring element consisting of a CFC material, the spring element being realized as an annular spring element (75) having a spring ring (85) that has support legs (80) on two opposing axial surfaces (78, 79), said support legs being arranged on the axial surfaces in a radially distributed manner so that each support leg formed on one axial surface is arranged between two support legs formed on the opposite axial surface.

3. The component connection according to claim 1 or 2,
**characterized in that**
the connection device is realized as a screw-connection device (31, 67, 74) that has a threaded bolt (36, 62, 70) consisting of a CFC or graphite material and at least one nut (41, 66) consisting of a CFC or graphite material, and the spring element is arranged between the nut and a CFC component in such a manner that a pressure force is active between the nut and the CFC component.

4. The component connection according to claim 3,
**characterized in that**
the threaded bolt (36, 62, 70) is provided with a bolt head and the threaded bolt penetrates two CFC components which are to be interconnected in a force-fitting manner and which are arranged between the bolt head of the threaded bolt and the nut (41, 66).

5. The component connection according to claim 4,
**characterized in that**
the bolt head is formed by a nut (41, 66) consisting of a CFC or graphite material.

6. The component connection according to any one of claims 1 to 3,
**characterized in that**
the threaded bolt (62) is formed on a first one of the CFC components interconnected in a force-fitting manner and penetrates the other CFC component, which is arranged between the first CFC component and the nut (66).

7. The component connection according to any of the preceding claims,
**characterized in that**
at least the elastic beam (44) of the beam spring element (42) or at least the spring ring (85) of the annular spring element (75) has a fiber orientation (46, 81) with fibers that extend along a stress axis (47, 82) connecting the support legs (43, 80).

8. The component connection according to any of the preceding claims,
**characterized by**
being implemented on a circulation device (20, 50) for circulating an ambient atmosphere, the circulation device having a plurality of components, which comprise at least a shaft (21, 51) for connecting the circulation device to a driving device, a blade carrier (22, 54) connected to the shaft, and a plurality of blades (23, 55) arranged on the blade carrier for applying a flow impulse to the atmosphere,
in such a manner that at least the blade carrier and the blades are realized as CFC components between which the component connection is formed.

## Revendications

1. Liaison d'éléments de construction, comprenant au moins deux composants CFC (carbone renforcé par des fibres de carbone) qui sont reliés par un dispositif de liaison comportant exclusivement des éléments de liaison en CFC ou en graphite,
**caractérisée en ce que**
la liaison d'éléments de construction est une liaison par force et comporte un élément de ressort en matériau CFC, l'élément de ressort étant formé comme élément de ressort à barre (42) comprenant deux pieds de support (43) destinés à s'appuyer sur un composant CFC et une barre de ressort (44) reliant les pieds de support et destinée à s'appuyer sur la tête de boulon ou sur l'écrou (41, 66) du dispositif de liaison formé comme dispositif de liaison vissée.

2. Liaison d'éléments de construction, comprenant au moins deux composants CFC qui sont reliés par un dispositif de liaison comportant exclusivement des éléments de liaison en CFC ou en graphite,
**caractérisée en ce que**
la liaison d'éléments de construction est une liaison par force et comporte un élément de ressort en matériau CFC, l'élément de ressort étant formé comme élément de ressort annulaire (75) comprenant une bague de ressort (85) qui comporte des pieds de support (80) sur deux surfaces axiales (78, 79) opposées, les pieds de support étant disposés d'une manière radialement distribuée sur les surfaces axiales de telle manière que chaque pied de support formé sur une surface axiale est disposé entre deux pieds de support formés sur la surface axiale opposée.

3. Liaison d'éléments de construction selon la revendication 1 ou la revendication 2,
**caractérisée en ce que**
le dispositif de liaison est formé comme dispositif de liaison vissée (31, 67, 74) qui comporte un boulon fileté (36, 62, 70) en un matériau CFC ou graphite et au moins un écrou (41, 66) en un matériau CFC ou graphite, et l'élément de ressort est disposé entre l'écrou et le composant CFC de telle manière qu'une force de pression agit entre l'écrou et le composant CFC.

4. Liaison d'éléments de construction selon la revendication 3,
**caractérisée en ce que**
le boulon fileté (36, 62, 70) est muni d'une tête de boulon et le boulon fileté pénètre deux composants CFC à relier par force disposés entre la tête de boulon du boulon fileté et l'écrou (41, 66).

5. Liaison d'éléments de construction selon la revendication 4,
**caractérisée en ce que**
la tête de boulon est formée par un écrou (41, 66) en un matériau CFC ou graphite.

6. Liaison d'éléments de construction selon l'une quelconque des revendications 1 à 3,
**caractérisée en ce que**
la tête de boulon (62) est formée sur un premier composant CFC des composants CFC reliés par force et pénètre l'autre composant CFC, qui est disposé entre le premier composant CFC et l'écrou (66).

7. Liaison d'éléments de construction selon l'une quelconque des revendications précédentes,
**caractérisée en ce qu'**
au moins la barre de ressort (44) de l'élément de ressort à barre (42) ou au moins la bague de ressort (85) de l'élément de ressort annulaire (75) présente une orientation de fibres (46, 81) comprenant des fibres qui s'étendent le long d'un axe de charge (47, 82) reliant les pieds de support (43, 80).

8. Liaison d'éléments de construction selon l'une quelconque des revendications précédentes,
**caractérisée par**
être formée sur un dispositif de circulation (20, 50) destiné à circuler une atmosphère ambiante, le dispositif de circulation comportant une pluralité de composants, qui comprennent au moins un arbre (21, 51) destiné à lier le dispositif de circulation à un dispositif d'entraînement, un porteur d'aubes (22, 54) lié à l'arbre et une pluralité d'aubes (23, 55) disposées sur le porteur d'aubes et destinées à soumettre l'atmosphère à une impulsion de flux,
de telle manière qu'au moins le porteur d'aubes et les aubes sont formés comme composants CFC entre lesquels la liaison d'éléments de construction est formée.
